# NEUE EUROPÄISCHE PATENTSCHRIFT

(11) **EP 2 269 854 B2**
(45) Veröffentlichungstag und Bekanntmachung des Hinweises auf die Entscheidung über den Einspruch: **21.03.2018**
(45) Hinweis auf die Patenterteilung: 10.12.2014
(21) Anmeldenummer: 10167889.4
(22) Anmeldetag: 30.06.2010
(51) Int. Cl.: B60J 7/06

(54) **Nutzfahrzeugaufbau, Dichtungselement für einen derartigen Nutzfahrzeugaufbau und Nutzfahrzeug mit einem derartigen Nutzfahrzeugaufbau oder einem derartigen Dichtungselement**
Commercial vehicle structure, seal element for such a commercial vehicle structure and commercial vehicle with such a commercial vehicle structure or such a seal element
Montage de véhicule utilitaire, élément d'étanchéité pour un tel montage de véhicule utilitaire et véhicule utilitaire doté d'un tel montage de véhicule utilitaire ou d'un tel élément d'étanchéité

(30) Priorität: 30.06.2009 DE 202009009005 U
(43) Veröffentlichungstag der Anmeldung: 05.01.2011
(73) Patentinhaber: Kögel Trailer GmbH & Co. KG, 89349 Burtenbach (DE)
(72) Erfinder: Okamus, Harun, 89349 Burtenbach (DE)
(74) Vertreter: Kilchert, Jochen

(56) Entgegenhaltungen:
- EP-A2- 1 090 789
- DE-U1- 29 700 177
- DE-U1- 29 702 588
- GB-A- 2 291 095

## Beschreibung

Die Erfindung betrifft einen Nutzfahrzeugaufbau gemäß dem Oberbegriff des Anspruchs 1 sowie ein Dichtungselement für einen derartigen Nutzfahrzeugaufbau und ein Nutzfahrzeug mit einem derartigen Nutzfahrzeugaufbau oder einem derartigen Dichtungselement.

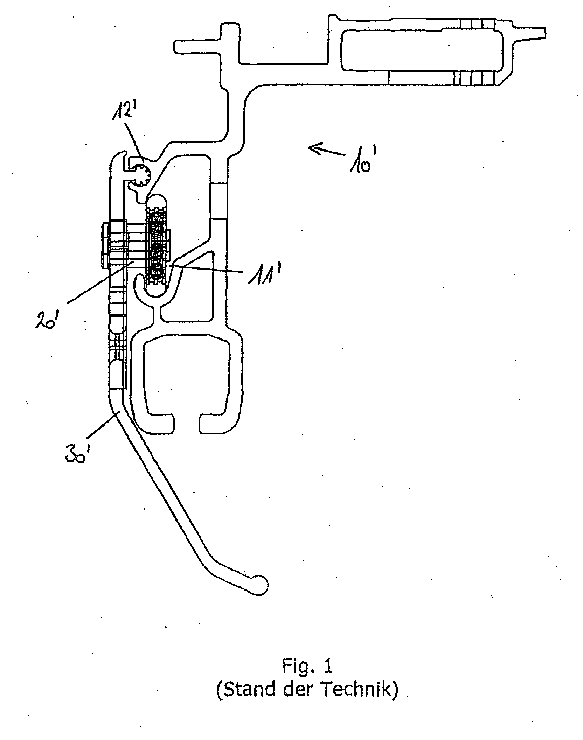

Ein Nutzfahrzeugaufbau der eingangs genannten Art wird von der Anmelderin hergestellt und vertrieben. Der bekannte Nutzfahrzeugaufbau umfasst mehrere Trägerelemente, insbesondere Dachholme, die sich im Wesentlichen in Längsrichtung des Nutzfahrzeugaufbaus erstrecken. Fig. 1 zeigt beispielhaft eine Querschnittsansicht eines derartigen Dachholms 10'. Der Dachholm 10' umfasst eine Schiene 11', in der mehrere voneinander beabstandete Planenlaufroller 20' geführt sind. Die Planenlaufroller 20' sind mit einer seitlichen Schiebeplane (nicht dargestellt) verbunden, die sich im geschlossenen Zustand über die vollständige Länge des Nutzfahrzeugaufbaus erstreckt. Der Dachholm 10' weist ferner eine Kederschiene 12' auf, in der eine Seitenplanenabdichtung 30' gelagert ist. Die Seitenplanenabdichtung 30' umfasst ein elastisches Gummimaterial, das sich horizontal über die gesamte Länge des Nutzfahrzeugaufbaus und vertikal über den Planenlaufroller 20' erstreckt, so dass der Planenlaufroller 20' vollständig von der Dichtungslippe überdeckt ist. Unterhalb des Planenlaufrollers 20' bzw. im oberen Bereich der Seitenplane (nicht dargestellt) ist die Dichtungslippe bzw. die Seitenplanenabdichtung 30' in Richtung der Seitenplane bzw. des Dachholms 10' geknickt, um eine zuverlässige Abdichtung zu gewährleisten. Es wird darauf hingewiesen, dass die in Fig. 1 dargestellte Anordnung der Dichtungslippe bzgl. des Planenrollers 20' die Überlagerung der jeweiligen Ruhezustände des Planenrollers 20' und der Dichtungslippe bzw. der Seitenplanenabdichtung 30' zeigt. Das bedeutet, dass die Seitenplanenabdichtung 30' tatsächlich im Gebrauch um eine virtuelle Rotationsachse im Bereich der Kederschiene 12' ausgelenkt ist, da der Planenroller 20' die Seitenplanenabdichtung 30' nach außen drückt. Daher ist unterhalb des Planenlaufiroliers 20' vorgesehen, die Seitenplanenabdichtung 30' abzuknicken, um die Abdichtung gegenüber der Seitenplane sicherzustellen.

Der Nachteil des aus der Praxis bekannten Nutzfahrzeugaufbaus besteht darin, dass durch den begrenzten Bauraum im Bereich der Dachholme zwischen der Planenlaufrolle und der Seitenplanenabdichtung ein vergleichsweise enger Kontakt besteht. Es besteht daher das Risiko, dass die Planenlaufroller bzw. Nietköpfe der Planenlaufroller an der Seitenplanenabdichtung scheuern, wodurch der Verschleiß der Seitenplanenabdichtung erhöht und die Lebensdauer bzw. Standfestigkeit der Seitenplanenabdichtung reduziert wird. Überdies bewirkt das Gleiten der Planenlaufroller an der Seitenplanenabdichtung ein Aufrauen des Seitenplanenabdichtungsmaterials, wodurch sich im zeitlichen Verlauf ein verschlechterter Reibbeiwert ergibt, so dass sich die Betätigung der Schiebeplane erschwert.

EP 1 090 789 A2 zeigt einen Nutzfahrzeugaufbau gemäß Oberbegriff des Anspruchs 1.

Die Aufgabe der Erfindung besteht darin, einen Nutzfahrzeugbau anzugeben, der einen reduzierten Verschleiß und eine vergleichsweise leichtgängige Laufrollenbetätigung aufweist. Ferner liegt der Erfindung die Aufgabe zugrunde, eine Verwendung eines Dichtungselements für einen derartigen Nutzfahrzeugaufbau und ein Nutzfahrzeug mit einem derartigen Nutzfahrzeugaufbau anzugeben.

Erfindungsgemäß wird diese Aufgabe im Hinblick auf den Nutzfahrzeugaufbau durch den Gegenstand des Anspruchs 1, im Hinblick auf die Verwendung eines Dichtungselements durch den Gegenstand des Anspruchs 6 und im Hinblick auf das Nutzfahrzeug durch den Gegenstand des Anspruchs 7 gelöst.

Die Erfindung beruht auf dem Gedanken, einen Nutzfahrzeugaufbau mit wenigstens einem Träger anzugeben, der wenigstens einen Laufrollenführung, in der eine Laufrolleneinheit beweglich gelagert oder lagerbar ist, und einen Aufnahmeabschnitt umfasst, der mit einem Halteabschnitt eines Dichtungselements verbunden oder verbindbar ist. Das Dichtungselement weist einen Dichtungsabschnitt auf, der die Laufrollenführung, insbesondere die in der Laufrollenführung gelagerte Laufrolleneinheit, überlappt. Dabei weist das Dichtungselement eine Kröpfung auf, die zwischen dem Halteabschnitt und dem Dichtungsabschnitt derart angeordnet ist, dass der Dichtungsabschnitt von der Laufrollenführung zumindest abschnittsweise weiter beabstandet ist als der Halteabschnitt.

Der Nutzfahrzeugaufbau weist außerdem die Merkmale des kennzeichnenden Teils des Anspruchs 1 auf.

Die Erfindung baut auf der Idee auf, den Verschleiß bzw. das Aufreiben des Dichtungselements dadurch zu vermeiden, dass zwischen dem Dichtungselement und der Laufrolleneinheit bzw. der Laufrollenführung ein ausreichender Abstand besteht, so dass ein enger Kontakt zwischen dem Dichtungselement und der Laufrolleneinheit vermieden wird. Der Vorteil der Erfindung besteht darin, dass durch die zwischen dem Halteabschnitt und dem Dichtungsabschnitt angeordnete Kröpfung eine kollisionsfreie bzw. zumindest kollisionsarme Bewegung der Laufrolleneinheiten in der Laufrollenführung ermöglicht wird. Dabei bezieht sich Kollisionsfreiheit bzw. Kollisionsarmut auf den Kontakt der Laufrolleneinheit mit dem Dichtungselement. Vorteilhaft ist in diesem Zusammenhang die vergleichsweise einfache, kostengünstige Konstruktionsweise des Dichtungselements. Ein weiterer Vorteil der Erfindung ergibt sich dadurch, dass das erfindungsgemäße Dichtungselement, das vorzugsweise als Gummiteil ausgeführt ist, bei der Gesamtbreitenberechnung des Nutzfahrzeugaufbaus gemäß geltenden Normen und Vorschriften nicht notwendigerweise zu berücksichtigen ist. Das Ladevolumen des Nutzfahrzeugaufbaus wird somit unter Einhaltung gesetzlicher Vorschriften nicht beeinträchtigt. Insgesamt wird durch die Erfindung die Langlebigkeit bzw. Verschleißfestigkeit des Nutzfahrzeugaufbaus, insbesondere des Dichtungselements des Nutzfahrzeugaufbaus, erhöht.

Das Dichtungselement bildet vorzugsweise eine dachseitige Seitenplanenabdichtung. Dabei ist der Vorteil des reduzierten Verschleißes des Dichtungselements besonders wirksam. Es ist allerdings nicht ausgeschlossen, das Dichtungselement in anderen Bereichen des Nutzfahrzeugaufbaus einzusetzen. Allgemein kann das Dichtungselement einen Schutz bzw. eine Abdichtung für bewegliche Bauteile, insbesondere Planen, eines Nutzfahrzeugaufbaus bilden.

Bei einer bevorzugten Ausführungsform weist das Dichtungselement einen Ruhezustand auf, in dem der Dichtungsabschnitt einen in Richtung der Laufrollenführung angewinkelten Abschnitt umfasst, und einen Betriebszustand, in dem der angewinkelte Abschnitt eine mit der Laufrolleneinheit verbindbare Plane berührt und mit einem Anpressdruck beaufschlagt. Der Dichtungsabschnitt kann also im Ruhezustand unterhalb der Kröpfung zumindest abschnittsweise angewinkelt sein bzw, eine angewinkelte Dichtungslippe bilden. Der Ruhezustand bezieht sich dabei insbesondere auf eine Konfiguration ohne Plane bzw, Seitenplane. Im Betriebszustand liegt der angewinkelte Abschnitt an der Plane an und erfährt dadurch eine elastische Verformung, so dass sich der angewinkelte Abschnitt bzw, allgemein der Dichtungsabschnitt streckt. Dabei wird der Dichtungsabschnitt durch die Verformung elastisch vorgespannt und übt in federartiger Weise einen Anpressdruck auf die Plane aus. Somit wird eine zuverlässige Abdichtung gewährleistet und ein beispielsweise durch den Fahrtwind bedingtes Abheben des Dichtungselements, konkret des Dichtungsabschnitts, verhindert.

Vorzugsweise erstreckt sich der Dichtungsabschnitt über eine Rungenschienenführung des Trägers. Diese Ausführungsform hat den Vorteil, dass auch bei zumindest teilweise geöffneter schiebeplane ein Schutz für die Rungertsehlenertführung, insbesondere einschließlich der darin gelagerten Rungenlaufrollen, gewährleistet ist.

Der Halteabschnitt des Dichtungselements umfasst einen Keder, der im Wesentlichen rechtwinklig zum Dichtungsabschnitt angeordnet und mit einer Kederaufnahme des Aufnahmeabschnitts formschlüssig verbunden oder verbindbar ist. Die Kederverbindung zwischen dem Träger und dem Dichtungselement ist besonders kostengünstig und einfach herstellbar. Überdies ermöglicht die Kederverbindung eine einfache Montage bzw. einen einfachen und schnellen Austausch des Dichtungselements.

Gemäß einem nebengeordneten Aspekt der Erfindung wird die Verwendung eines Dichtungselements für einen Nutzfahrzeugaufbau mit einem Halteabschnitt und einem Dichtungsabschnitt offenbart und beansprucht, wobei der Halteabschnitt einen Keder umfasst, der mit einem Träger des Nutzfahrzeugaufbaus verbindbar ist.

Dabei ist zwischen dem Halteabschnitt und dem Dichtungsabschnitt eine Kröpfung angeordnet. Das Dichtungselement weist außerdem die Merkmale des kennzeichnenden Teils des Anspruchs 6 auf.

Ein weiterer, nebengeordneter Aspekt der Erfindung betrifft ein Nutzfahrzeug mit einem eingangs beschriebenen Nutzrahrzeugaufbau.

Die Erfindung wird im Folgenden anhand von Ausführungsbeispielen unter Bezugnahme auf die beigefügte, schematische Zeichnung näher erläutert. Darin zeigen
Fig. 1 einen Querschnitt durch einen Träger eines Nutzfahrzeugaufbaus gemäß dem Stand der Technik, und
Fig. 2 einen Querschnitt durch einen Träger eines erfindungsgemäßen Nutzfahrzeugaufbaus gemäß einem bevorzugten Ausführungsbeispiel.

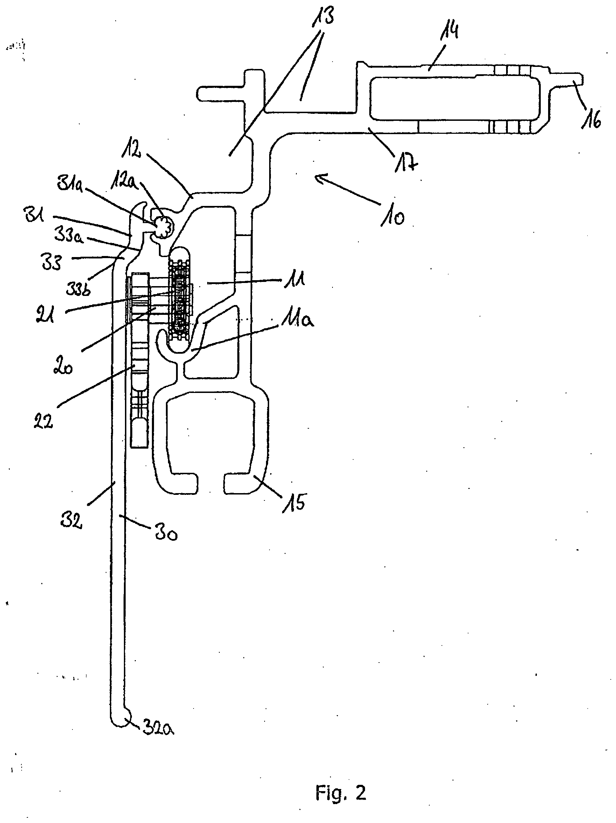

Fig. 2 zeigt einen Querschnitt durch einen Träger 10, insbesondere einen Dachträger bzw. Dachholm des Nutzfahrxeugaufbaus. Der Träger 10 umfasst eine Laufrollenführung 11, die ein Hohlprofil mit einer unteren U-förmigen Führungsschiene 11a bildet. Die Führungsschiene 11a ist also im Wesentlichen schienenartig bzw. rinnenartig ausgebildet, Die Laufrollenführung 11 erstreckt sich vorzugsweise über die gesamte Länge des Nutzfahrzeugaufbaus. In der Laufrollenführung 11 ist eine Laufrolleneinheit 20 angeordnet, die eine in der Laufrollenführung 11 bzw. Führungsschiene geführte Laufrolle 21 und einen Seitenplanenhalter 22 umfasst, wobei der Seitenplanenhalter 22 drehgelenkig mit der Laufrolle 21 gekoppelt ist. Das bedeutet, dass bei Bewegung, insbesondere Rotation, der Laufrolle 21 die Ortslage bzw. Ausrichtung des Seitenplanenhaiters 22 unverändert bleibt. Der Seitenplanenhalter 22 ist im Wesentlichen parallel zur Laufrolle 21 bzw. zur Bewegungsebene der Laufrolle 21 angeordnet und erstreckt sich über die Führungsschiene 11a nach unten. Der Seitenplanenhalter 22 endet auf Höhe einer Rungenschienenführung 15 des Trägers 10 bzw. schließt auf Höhe der Rungenschienenführung 15 des Trägers 10 ab. Der Seitenpanenhalter 22 dient zur Befestigung einer nicht dargestellten Seitenplane, die eine seitliche Ladeöffnung des Nutzfahrzeugsaufbaus verschließt. Vorzugsweise erstreckt sich die Seitenplane im geschlossenen Zustand über die gesamte Länge des Nutzfahrzeugsufbaus. Dabei umfasst die Seitenplane ein flexibles Material.

Der Träger 10 bzw. Dachholm umfasst ferner zwei Dachrollenschienen 13, die im Wesentlichen oberhalb der Laufroilenführung 11 angeordnet sind. Dabei ist wenigstens eine Dachrollenschiene 13 einem oberen horizontalen Abschnitt 17 des Trägers 10 zugeordnet. Der horizontale Abschnitt 17 des Trägers 10 umfasst ferner eine Dachholmverstärkung 14, die im Wesentlichen als Kastenprofil bzw. in der Art eines Vierkantprofils ausgeführt ist. In Richtung zu einer Nutzfahrzeugmittelebene erstreckt sich von der Dachholmverstärkung 14 in horizontaler Ausrichtung eine Dachspriegelsicherung 16, die im Wesentlichen eine sich horizontal von der Dachholmverstärkung 14 erstreckende Nase bildet.

Die Laufrollenführung 11, in der die Laufrolleneinheit 20 geführt ist, ist im unteren Bereich durch die Führungsschiene 11a und im oberen Bereich durch einen Aufnahmeabschnitt 12 des Trägers 10 begrenzt. Der Aufnahmeabschnitt 12 umfasst eine Kederaufnahme 12a, die sich horizontal entlang des Trägers 10 bzw. des Aufnahmeabschnitts 12 erstreckt. Die Kederaufnahme 12a weist eine Öffnung auf, die im Bezug auf den Nutzfahrzeugaufbau im Wesentlichen nach außen gerichtet ist.

Die Kederaufnahme 12a bildet ein Befestigungsmittel für ein Dichtungselement 30, das mit einem Keder 31a in der Kederaufnahme 12a gehalten bzw. gelagert ist. Das Dichtungselement 30 umfasst einen Halteabschnitt 31, der mit dem Keder 31a im Wesentlichen ein T-förmiges Profil bildet, wobei der Stamm des T-förmigen Profils durch den Keder 31a gebildet ist. Der Keder 31a ist also im Wesentlichen rechtwinklig am Halteabschnitt 31 angeordnet. Der Halteabschnitt 31 ist im Allgemeinen planparallel zur Bewegungsebene der Laufrolleneinheit 20 bzw. der Laufrolle 21 ausgerichtet und bildet eine Parallelebene zur Führungsebene der Laufrollenführung 11.

An den Halteabschnitt 31 angrenzend, insbesondere nach unten angrenzend, bzw. unterhalb des Halteabschnitts 31, weist das Dichtungselement 30 eine Kröpfung 33 auf. Die Kröpfung 33 umfasst im Wesentlichen zwei gegenläufig angeordnete Krümmungen 33a, 33b, wobei die obere Krümmung 33a im Bezug auf den Nutzfahrzeugaufbau bzw. den Träger 10 nach außen gerichtet ist. Das bedeutet, dass der Krümmungsmittelpunkt bzw. der Mittelpunkt des virtuellen Kreisbogens, den die obere Krümmung 33a beschreibt, außerhalb des Nutzfahrzeugaufbaus, insbesondere dem Keder 31a gegenüberliegend, angeordnet ist. Umgekehrt verhält es sich mit der unteren Krümmung 33b, die sich unmittelbar an die obere Krümmung 33a anschließt. Die untere Krümmung 33b ist gegenüber der oberen Krümmung 33a gegenläufig ausgerichtet, so dass der Krümmungsmittelpunkt der unteren Krümmung 33b bzw. der Mittelpunkt des die Krümmung beschreibenden virtuellen Teilkreises innerhalb des Nutzfahrzeugaufbaus bzw. kederseitig bezüglich des Dichtungselements 30 angeordnet ist. Die Krümmungsradien der oberen Krümmung 33a und der unteren Krümmung 33b sind vorzugsweise derart bemessen, dass der an die obere Krümmung 33a anschließende Halteabschnitt 31 und ein an die untere Krümmung 33b anschließender Dichtungsabschnitt 32 parallel zueinander bzw. in voneinander beabstandet angeordneten parallelen Ebenen angeordnet sind. Dabei weisen der Halteabschnitt 31 und der Dichtungsabschnitt 32 bzw. die jeweiligen Lageebenen des Halteabschnitts 31 und des Dichtungsabschnitts 32 einen Abstand in horizontaler Richtung auf, der derart angepasst ist, dass die Laufrolleneinheit 20 im Wesentlichen reibungsfrei bezüglich des Dichtungselements 30 in der Laufrollenführung 11 bewegbar ist.

Vorzugsweise besteht zwischen dem Dichtungselement 30 bzw. dem Dichtungsabschnitt 32 und der Laufrolleneinheit 20, insbesondere dem Seitenplanenhalter 22 ein Freiraum. Es ist auch möglich, dass sich die Laufrolleneinheit 20, insbesondere der Seitenplanenhalter 22, und der Dichtungsabschnitt 32 berühren, wobei jedoch der Anpressdruck des Dichtungsabschnittes 32 an die Laufrolleneinheit 20 aufgrund der Kröpfung 33 derart reduziert ist, dass der Reibungsbeiwert und dadurch der Verschleiß des Dichtungsabschnittes 32 reduziert ist.

Wie in Fig. 2 dargestellt, weist der Dichtungsabschnitt 32 an einem unteren Ende eine kederartige Wölbung 32a auf, die sich im Wesentlichen in Richtung des Nutzfahrzeugaufbaus bzw. Trägers 10 erstreckt. Die kederartige Wölbung 32a ist also auf der Kederseite des Dichtungselements 30 angeordnet. Alternativ ist es möglich, dass der Dichtungsabschnitt 32 am unteren Ende anstelle der kederartigen Wölbung 32a geradlinig verläuft. Der Dichtungsabschnitt 32 kann am unteren Ende auch angefast sein.

Vorzugsweise umfasst das Dichtungselement 30 ein gummiähnliches oder gummiartiges Material. Im Allgemeinen ist es zweckmäßig, dass das Dichtungselement 30 ein flexibles Material umfasst.

Die Darstellung gemäß Fig. 2 zeigt das Dichtungselement 30 im Betriebszustand, also im Zusammenwirken mit der nicht dargestellten Seitenplane. Das Dichtungselement 30, insbesondere der Dichtungsabschnitt 32, ist dabei derart elastisch verformt, dass sich der Dichtungsabschnitt 32 geradlinig nach unten erstreckt. Der Dichtungsabschnitt 32 ist somit vorgespannt und wird unter Ausübung eines Anpressdrucks an die Seitenplane gedrückt. Im Ruhezustand weist das Dichtungselement 30, insbesondere der Dichtungsabschnitt 32 vorzugsweise einen abgewinkelten Abschnitt bzw. einen Knick gemäß Fig. 1 auf, der sich in Richtung der Laufrollenführung 11 erstreckt.

Die Erfindung ist besonders zur Anwendung bei Nutzfahrzeugaufbauten mit wenigstens einer Seitenplane, insbesondere sogenannten Curtainsider-Fahrzeugen bzw. -Sattelanhängern, geeignet. Dabei ist die Erfindung nicht auf Nutzfahrzeuge mit einer Seitenplane beschränkt, sondern vielseitig einsetzbar. Beispielsweise ist es auch möglich, das Dichtungselement 30 zur Abdichtung einer Dachplanenführung oder einer Planenführung im Bereich des Heckportals eines Nutzfahrzeugs einzusetzen. Überdies ist es denkbar, das Dichtungselement 30 allgemein für die Abdichtung verschiebbarer Elemente eines Nutzfahrzeugsaufbsus zu verwenden. Beispielsweise kann das Dichtungselement für starre, verschiebbare Wandelementeeines Nutzfahrzeugaufbaus eingesetzt werden. Dies betrifft auch Rollläden aus flexiblen oder starren Elementen, die beispielsweise an einem Heckportal eines Nutzfahrxeugaufbaus angeordnet sein können.

Die Erfindung ist generell nicht auf das hier gezeigte Ausführungsbeispiel eingeschränkt. Andere Varianten, insbesondere hinsichtlich des Dichtungselements 30, sind möglich. Vorzugsweise weist das Dichtungselement 30 einen Dichtungsabschnitt 32 auf, der im Ruhezustand eine oder mehrere Abknickungen aufweist, so dass der Anpressdruck des Dichtungselements 30 bzw. des Dichtungsabschnitts 32 an die Seitenplane erhöht ist.

### Bezugszeichenliste

- 10': Dachholms
- 11': Schiene
- 12': Kederschiene
- 20': Planenlaufroller
- 30': Seitenplanenabdichtung

- 10: Träger
- 11: Laufrollenführung
- 11a: Führungsschiene
- 12: Aufnahmeabschnitt
- 12a: Kederaufnahme
- 13: Dachrollenschienen
- 14: Dacholmverstärkung
- 15: Rungenschienenführung

- 16: Dachspriegelsicherung
- 17: Horizontaler Abschnitt
- 20: Laufrolleneinheit
- 21: Laufrolle
- 22: Seitenplanenhalter
- 30: Dichtungselement
- 31: Halteabschnitt
- 31a: Keder
- 32: Dichtungsabschnitt
- 32a: kederartige Wölbung
- 33: Kröpfung
- 33a: obere Krümmung
- 33b: untere Krümmung

## Patentansprüche

1. Nutzfahrzeugaufbau mit wenigstens einem Träger (10), der wenigstens eine Laufrollenführung (11), in der eine Laufrolleneinheit (20) beweglich gelagert oder lagerbar ist, und einen Aufnahmeabschnitt (12) umfasst, der mit einem Halteabschnitt (31) eines Dichtungselements (30) verbunden oder verbindbar ist, wobei das Dichtungselement (30) einen Dichtungsabschnitt (32) aufweist, der die Laufrollenführung (11), insbesondere die in der Laufrollenführung (11) gelagerte Laufrolleneinheit (20), überlappt,
wobei das Dichtungselement (30) eine Kröpfung (33) aufweist, die zwischen dem
Halteabschnitt (31) und dem Dichtungsabschnitt (32) derart angeordnet ist, dass der Dichtungsabschnitt (32) von der Laufrollenführung (11) zumindest abschnittsweise weiter beabstandet ist als der Halteabschnitt (31)
**dadurch gekennzeichnet, dass**
die Kröpfung (33) im Wesentlichen zwei Krümmungen (33a, 33b) umfasst, wobei die obere Krümmung (33a) im Bezug auf den Träger (10) nach außen gerichtet und sich die untere Krümmung (33b) unmittelbar an die obere Krümmung (33a) anschließt und gegenüber der oberen Krümmung (33a) gegenläufig ausgerichtet ist, so dass der Halteabschnitt (31) und der Dichtungsabschnitt (32) in voneinander beabstandet angeordneten parallelen Ebenen angeordnet sind, wobei der Halteabschnitt (31) und der Dichtungsabschnitt (32) einen Abstand in horizontaler Ebene aufweisen, der derart angepasst ist, dass die Laufrolleneinheit (20) im Wesentlichen reibungsfrei bezüglich des Dichtungselements (30) in der Laufrollenführung (11) bewegbar ist, wobei der Halteabschnitt mit einem Keder (31a) ein T-förmiges Profil bildet, wobei der Stamm des T-förmigen Profils durch den Keder (31a) gebildet ist.

2. Nutzfahrzeugaufbau nach Anspruch 1,
**dadurch gekennzeichnet, dass**
das Dichtungselement (30) eine dachseitige Seitenplanenabdichtung bildet.

3. Nutzfahrzeugaufbau nach Anspruch 1 oder 2,
**dadurch gekennzeichnet, dass**
das Dichtungselement (30) einen Ruhezustand, in dem der Dichtungsabschnitt (32) zumindest abschnittsweise einen in Richtung der Laufrollenführung (11) angewinkelten Abschnitt umfasst, und Betriebszustand aufweist, in dem der angewinkelte Abschnitt eine mit der Laufrolleneinheit (20) verbindbare Plane berührt und mit einem Anpressdruck beaufschlagt.

4. Nutzfahrzeugaufbau nach einem der Ansprüche 1 bis 3,
**dadurch gekennzeichnet, dass**
sich der Dichtungsabschnitt (32) über eine Rungenschienenführung (15) des Trägers (10) erstreckt.

5. Nutzfahrzeugaufbau nach einem der Ansprüche 1 bis 4,
**dadurch gekennzeichnet, dass**
der Halteabschnitt (31) einen Keder (31a) umfasst, der im Wesentlichen rechtwinklig zum Dichtungsabschnitt (32) angeordnet und mit einer Kederaufnahme (12a) des Aufnahmeabschnitts (12) formschlüssig verbunden oder verbindbar ist.

6. Verwendung eines Dichtungselements (30) für einen Nutzfahrzeugaufbau mit einem Halteabschnitt (31) und einem Dichtungsabschnitt (32), wobei der Halteabschnitt (31) einen Keder (31a) umfasst, der mit einem Träger (10) des Nutzfahrzeugaufbaus verbindbar ist, wobei zwischen dem Halteabschnitt (31) und dem Dichtungsabschnitt (32) eine Kröpfung (33) angeordnet ist,
**dadurch gekennzeichnet, dass**
die Kröpfung (33) im Wesentlichen zwei Krümmungen (33a, 33b) umfasst, wobei die obere Krümmung (33a) im Bezug auf den Träger (10) nach außen gerichtet und sich die untere Krümmung (33b) unmittelbar an die obere Krümmung (33a) anschließt und gegenüber der oberen Krümmung (33a) gegenläufig ausgerichtet ist, so dass der Halteabschnitt (31) und der Dichtungsabschnitt (32) in voneinander beabstandet angeordneten parallelen Ebenen angeordnet sind, wobei der Halteabschnitt (31) und der Dichtungsabschnitt (32) einen Abstand in horizontaler Ebene aufweisen, der derart angepasst ist, dass eine Laufrolleneinheit (20) des Nutzfahrzeugaufbaus im Wesentlichen reibungsfrei bezüglich des Dichtungselements (30) in einer Laufrollenführung (11) des Nutzfahrzeugaufbaus bewegbar ist, wobei der Halteabschnitt mit einem Keder (31a) ein T-förmiges Profil bildet, wobei der Stamm des T-förmigen Profils durch den Keder (31a) gebildet ist.

7. Nutzfahrzeug mit einem Nutzfahrzeugaufbau nach Anspruch 1.

## Claims

1. A commercial vehicle structure with at least one carrier (10) which comprises at least one roller guide (11) in which a roller unit (20) is movably mounted or able to be mounted, and a receiving section (12), which is connected or able to be connected with a holding section (31) of a sealing element (30), wherein the sealing element (30) has a sealing section (32) which overlaps the roller guide (11), in particular which overlaps the roller unit (20) mounted in the roller guide (11),
wherein the sealing element (30) has an offset (33) which is arranged between the holding section (31) and the sealing section (32) such that the sealing section (32) is spaced at least in sections further apart from the roller guide (11) than the holding section (31),
**characterized in that**
the offset (33) comprises substantially two curvatures (33a, 33b), wherein the upper curvature (33a) is directed outwards in relation to the carrier (10) and the lower curvature (33b) adjoins directly onto the upper curvature (33a) and is aligned in the opposite direction with respect to the upper curvature (33a), so that the holding section (31) and the sealing section (32) are arranged in parallel planes spaced apart from one another, wherein the holding section (31) and the sealing section (32) have a distance in the horizontal plane which is adapted such that the roller unit (20) is movable in a substantially frictionless manner with respect to the sealing element (30) in the roller guide (11), wherein the holding section forms with a beading (31a) a T-shaped profile, wherein the stem of the T-shaped profile is formed by the beading (31a).

2. The commercial vehicle structure according to Claim 1,
**characterized in that**
the sealing element (30) forms a side tarpaulin seal on the roof side.

3. The commercial vehicle structure according to Claim 1 or 2,
**characterized in that**
the sealing element (30) comprises a state of rest, in which the sealing section (32) comprises at least in sections a section angled in the direction of the roller guide (11), and an operating state, in which the angled section touches a tarpaulin which is able to be connected with the roller unit (20) and acts upon it with a contact pressure.

4. The commercial vehicle structure according to one of Claims 1 to 3,
**characterized in that**
the sealing section (32) extends over a post rail guide (15) of the carrier (10).

5. The commercial vehicle structure according to one of Claims 1 to 4,
**characterized in that**
the holding section (31) comprises a beading (31a) which is arranged substantially at right-angles to the sealing section (32) and is connected or able to be connected with a beading mount (12a) of the receiving section (12) in a form-fitting manner.

6. Use of a sealing element (30) for a commercial vehicle structure with a holding section (31) and with a sealing section (32), wherein the holding section (31) comprises a beading (31a) which is able to be connected with a carrier (10) of the commercial vehicle structure, wherein an offset (33) is arranged between the holding section (31) and the sealing section (32),
**characterized in that**
the offset (33) comprises substantially two curvatures (33a, 33b), wherein the upper curvature (33a) is directed outwards in relation to the carrier (10) and the lower curvature (33b) adjoins directly onto the upper curvature (33a) and is aligned in the opposite direction with respect to the upper curvature (33a), so that the holding section (31) and the sealing section (32) are arranged in parallel planes arranged spaced apart from one another, wherein the holding section (31) and the sealing section (32) have a distance in the horizontal plane which is adapted such that a roller unit (20) of the commercial vehicle structure is movable in a substantially frictionless manner with respect to the sealing element (30) in a roller guide (11) of the commercial vehicle structure, wherein the holding section forms with a beading (31a) a T-shaped profile, wherein the stem of the T-shaped profile is formed by the beading (31a).

7. A commercial vehicle with a commercial vehicle structure according to Claim 1.

## Revendications

1. Montage de véhicule utilitaire comprenant au moins un support (10) qui comprend au moins un guide à galets de roulement (11) dans lequel une unité de galets de roulement (20) est placée ou peut être placée de façon mobile, et un tronçon de réception (12) qui est relié ou peut être relié à un tronçon de retenue (31) d'un élément d'étanchéité (30), dans lequel l'élément d'étanchéité (30) présente un tronçon d'étanchéité (32) qui chevauche le guide à galets de roulement (11), en particulier l'unité de galets de roulement (20) placée dans le guide à galets de roulement (11),
dans lequel l'élément d'étanchéité (30) présente un coude (33) qui est ainsi disposé entre le tronçon de retenue (31) et le tronçon d'étanchéité (32) que le tronçon d'étanchéité (32) est plus éloigné du guide à galets de roulement (11), au moins par tronçons, que le tronçon de retenue (31),
**caractérisé en ce que**
le coude (33) comprend essentiellement deux courbures (33a, 33b), dans lequel la courbure supérieure (33a) est orientée vers l'extérieur par rapport au support (10) et la courbure inférieure (33b) se raccorde directement à la courbure supérieure (33a) et est alignée en sens opposé par rapport à la courbure supérieure (33a) de sorte que le tronçon de retenue (31) et le tronçon d'étanchéité (32) sont disposés dans des plans parallèles éloignés l'un de l'autre, dans lequel le tronçon de retenue (31) et le tronçon d'étanchéité (32) présentent un écart dans le plan horizontal qui est ainsi adapté que l'unité de galets de roulement (20) est mobile essentiellement sans frottement par rapport à l'élément d'étanchéité (30) dans le guide à galets de roulement (11), dans lequel le tronçon de retenue forme un profilé en T avec un bourrelet (31a), dans lequel la tige du profilé en T est formée par le bourrelet (31a).

2. Montage de véhicule utilitaire selon la revendication 1,
**caractérisé en ce que**
l'élément d'étanchéité (30) forme une étanchéité plane latérale côté toit.

3. Montage de véhicule utilitaire selon la revendication 1 ou 2,
**caractérisé en ce que**
l'élément d'étanchéité (30) présente un état de repos dans lequel le tronçon d'étanchéité (32) comprend un tronçon plié dans le sens du guide à galets de roulement (11) au moins par tronçons, et un état de fonctionnement dans lequel le tronçon plié touche un plan pouvant être relié à l'unité de galets de roulement (20) et fournit une pression d'appui.

4. Montage de véhicule utilitaire selon l'une des revendications 1 à 3,
**caractérisé en ce que**
le tronçon d'étanchéité (32) s'étend sur un guide à rails à montants (15) du support (10).

5. Montage de véhicule utilitaire selon l'une des revendications 1 à 4,
**caractérisé en ce que**
le tronçon de retenue (31) comprend un bourrelet (31a) qui est disposé essentiellement en angle droit par rapport au tronçon d'étanchéité (32) et est relié ou peut être relié par complémentarité de forme à une réception de bourrelet (12a) du tronçon de réception (12) .

6. Emploi d'un élément d'étanchéité (30) pour un montage de véhicule utilitaire comprenant un tronçon de retenue (31) et un tronçon d'étanchéité (32), dans lequel le tronçon de retenue (31) comprend un bourrelet (31a) qui peut être relié à un support (10) du montage de véhicule utilitaire, dans lequel un coude (33) est placé entre le tronçon de retenue (31) et le tronçon d'étanchéité (32),
**caractérisé en ce que**
le coude (33) comprend essentiellement deux courbures (33a, 33b), dans lequel la courbure supérieure (33a) est orientée vers l'extérieur par rapport au support (10) et la courbure inférieure (33b) se raccorde directement à la courbure supérieure (33a) et est alignée en sens opposé par rapport à la courbure supérieure (33a) de sorte que le tronçon de retenue (31) et le tronçon d'étanchéité (32) sont disposés dans des plans parallèles éloignés l'un de l'autre, dans lequel le tronçon de retenue (31) et le tronçon d'étanchéité (32) présentent un écart dans le plan horizontal qui est ainsi adapté qu'une unité de galets de roulement (20) du véhicule utilitaire est mobile essentiellement sans frottement par rapport à l'élément d'étanchéité (30) dans un guide à galets de roulement (11) du véhicule utilitaire, dans lequel le tronçon de retenue forme un profilé en T avec un bourrelet (31a), dans lequel la tige du profilé en T est formée par le bourrelet (31a).

7. Véhicule utilitaire comprenant un montage de véhicule utilitaire selon la revendication 1.
